# EUROPÄISCHE PATENTANMELDUNG

(11) **EP 3 208 033 A2**
(43) Veröffentlichungstag der Anmeldung: **23.08.2017**
(21) Anmeldenummer: 17158140.8
(22) Anmeldetag: 26.10.2011
(51) Int. Cl.: B23Q 1/01

(54) **STEUERUNG EINER VORRICHTUNG ZUM BEARBEITEN EINES GROSSFORMATIGEN WERKSTÜCKES**

(30) Priorität: 03.11.2010 DE 102010050149
(62) Teilanmeldung aus: 11788365.2
(71) Anmelder: Mubea Systems, Société Anonyme, 7700 Mouscron (BE)
(72) Erfinder: Havegeer, Francky Gaston, 8800 Roeselare (BE)
(74) Vertreter: Behrendt, Arne

(57) **Zusammenfassung**

Die Erfindung betrifft ein Verfahren zum Bearbeiten eines großformatigen Werkstückes, die wenigstens eine Bearbeitungseinheit (2) mit einer portalförmig ausgebildeten Trageeinheit (5) aufweist, die auf in der Hauptrichtung (X) verlaufenden X-Schienen (3,4) verfahrbar ist, zwischen denen das Werkstück ortsfest positionierbar ist, und die eine mit einem Bearbeitungswerkzeug (7) versehener Bearbeitungseinrichtung (6) trägt, welche relativ zu der Trageeinheit (5) sowohl in der Hauptrichtung (X) als auch in der quer dazu verlaufenden Y-Richtung verschiebbar ist. Um bei einem derartigen Verfahren die für die Bearbeitung des großformatigen Werkstückes erforderliche Bearbeitungszeit zu verkürzen, schlägt die Erfindung vor, dass beim Verbringen der Bearbeitungseinheit (2) an einen noch nicht bearbeiteten Abschnitt des Werkstückes die Bearbeitungseinrichtung (6) der Trageeinheit (5) ab dem Beginn der Verlangsamung der Bewegung der Trageeinheit (5) in der Hauptrichtung (X) bis zum Erreichen der neuen Bearbeitungsposition der Bearbeitungseinrichtung (6) in dem noch nicht bearbeiteten Abschnitt des Werkstückes vorauseilt und ab Erreichen dieser neuen Bearbeitungsposition relativ zu der Trageeinheit (5) eine die Bewegung der Trageeinheit (5) kompensierende gegenläufige Bewegung ausführt.

## Beschreibung

Die Erfindung betrifft ein Verfahren zum Steuern einer Vorrichtung zum Bearbeiten eines großformatigen Werkstückes, die wenigstens eine Bearbeitungseinheit mit einer portalförmig ausgebildete Trageeinheit aufweist, die auf in der Hauptrichtung (X) verlaufenden X-Schienen verfahrbar ist, zwischen denen das Werkstück ortsfest positionierbar ist, und die eine mit einem Bearbeitungswerkzeug versehene Bearbeitungseinrichtung trägt, welche relativ zu der Trageeinheit sowohl in der Hauptrichtung (X) als auch in der quer dazu verlaufenden Y-Richtung verschiebbar ist.

Eine Vorrichtung der genannten Art ist beispielsweise aus der US 2006/0291971A1 bekannt.

Durch die oben angegebene besondere Ausgestaltung der Vorrichtung zum Bearbeiten eines großformatigen Werkstückes muss bei einer Bearbeitung eines an den momentan mit der Bearbeitungseinheit bearbeiteten Abschnitt des Werkstückes in der Hauptrichtung (X) angrenzenden Abschnittes nicht in jedem Fall auch die Trageeinheit relativ zum Werkstück neu positioniert werden. Es reicht vielmehr aus, allein die Bearbeitungseinrichtung relativ zu dem großformatigen Werkstück zu bewegen. Die Trageeinheit muss erst dann neu positioniert werden, wenn die Bearbeitung im gesamten zweidimensionalen Bearbeitungsbereich der Bearbeitungseinheit abgeschlossen ist. Folglich muss nur in diesem Fall die Bearbeitungseinheit, d. h., mit der Bearbeitungseinrichtung auch die Trageeinheit relativ zu dem Werkstück neu positioniert werden. Während der Durchführung der Bearbeitungsmaßnahmen in dem zweidimensionalen Bearbeitungsbereich einer Bearbeitungseinheit muss nur die Bearbeitungseinrichtung bewegt werden, welche eine viel geringere Masse als die gesamte Bearbeitungseinheit aufweist. Die Bearbeitungseinrichtung kann somit in der Hauptrichtung verhältnismäßig schnell bewegt werden. Hierdurch wird die für die Durchführung der gewünschten Bearbeitung des Werkstückes erforderliche Bearbeitungszeit reduziert, was wiederum die Herstellungskosten eines mit einer solchen Vorrichtung bearbeiteten, großformatigen Werkstückes reduziert. Mit einer solchen Vorrichtung ist also eine schnelle und kosteneffiziente Bearbeitung von großformatigen Werkstücken möglich.

Unter einem großformatigen Werkstück wird hier beispielsweise ein Bauteil aus der Fertigung von Eisenbahnwaggons, Flugzeugen, Schiffen oder ähnlichem verstanden. Wesentlich ist, dass das zu bearbeitende großformatige Werkstück relativ große Abmessungen hat und an vielen Positionen bearbeitet werden muss.

Die großformatigen Werkstücke bestehen beispielsweise aus einem relativ dünnwandigen Metall, wie beispielsweise Stahl oder Aluminium, aus Kunststoff, aus einem Verbundwerkstoff oder aus Holz.

Ein Problem bei der Arbeit mit der oben erläuterten Vorrichtung besteht noch in folgendem:
Aufgrund des relativ hohen Gewichts der Trageeinheit kann diese bei Erreichen einer Bearbeitungsstellung nicht abrupt gestoppt werden, ohne dass es zu Schäden an der Bearbeitungseinheit kommen würde. Vielmehr ist es erforderlich, die Trageeinheit vor dem Erreichen ihrer Bearbeitungsstellung abzubremsen und so ihre Bewegung bis zum Stillstand möglichst gleichmäßig zu verlangsamen. Während dieser Verlangsamungsphase kann bei der vorbekannten Werkzeugmaschine der eingangs genannten Art keine Bearbeitung des großformatigen Werkstückes mit der Bearbeitungseinrichtung durchgeführt werden. Dadurch wird die zur Bearbeitung des gesamten Werkstückes erforderliche Bearbeitungszeit insgesamt deutlich erhöht.

Es ist deshalb Aufgabe der Erfindung, das Verfahren zur Steuerung dieser Vorrichtung dahingehend zu verbessern, dass eine erheblich schnellere und damit auch kostengünstigere Bearbeitung eines großformatigen Werkstückes ermöglicht wird.

Zur Lösung dieser Aufgabe schlägt die Erfindung ausgehend von einem Verfahren der eingangs genannten Art vor, dass beim Verbringen der Bearbeitungseinheit an einen noch nicht bearbeiteten Abschnitt des Werkstückes die Bearbeitungseinrichtung der Trageeinheit ab dem Beginn der Verlangsamung der Bewegung der Trageeinheit in der Hauptrichtung (X) bis zum Erreichen der neuen Bearbeitungsposition der Bearbeitungseinrichtung in dem noch nicht bearbeiteten Abschnitt des Werkstückes vorauseilt und ab Erreichen dieser neuen Bearbeitungsposition relativ zur Trageeinheit eine die Bewegung der Trageeinheit kompensierende gegenläufige Bewegung ausführt.

Die während der Verlangsamung der Bewegung der Trageeinheit durchgeführte Kompensationsbewegung der Bearbeitungseinrichtung relativ zu der Trageeinheit in der Hauptrichtung (X) ermöglicht es der Bearbeitungseinrichtung" die Arbeit am neuen Einsatzort bereits während des Bremsvorganges der Trageeinheit aufzunehmen, was erheblich zu einer Reduzierung der der benötigten Gesamtarbeitszeit am großformatigen Werkstück beiträgt.

Die oben erläuterte Reduzierung der Bearbeitungszeit in jeder Bearbeitungsposition ist besonders wichtig, wenn bei besonders großen Werkstücken zwei Bearbeitungseinheiten an einem Werkstück zugleich zum Einsatz kommen, weil man dann diese Verkürzung der individuellen Bearbeitungszeit an jeder Bearbeitungsposition zusätzlich zu einem schnelleren Wechsel der jeweiligen Bearbeitungsposition nutzen kann, letzteres allerdings nur dann, wenn man die jeweiligen Bearbeitungsposition der beiden Bearbeitungseinrichtungen und die in jeder Bearbeitungspositionen noch benötigte Bearbeitungszeit berücksichtigt.

Herkömmlich wird die Bearbeitung eines großformatigen Werkstücks mittels zwei Bearbeitungseinheiten auf der Basis des erfassbaren Abstandes zwischen den Bearbeitungseinheiten durchgeführt, insbesondere um Kollisionen der Bearbeitungseinheiten während der Bearbeitung des großformatigen Werkstückes zu vermeiden. Hierbei kann es vorkommen, dass eine der Bearbeitungseinheiten nicht eingesetzt werden kann, weil sie nicht zu dem Bereich des großformatigen Werkstückes gelangen kann, in welchem noch eine Bearbeitung vorgenommen werden soll, weil ihr die andere Bearbeitungseinheit im Wege ist. Hiermit ist wiederum ein höherer Bearbeitungszeitaufwand bei der Bearbeitung eines großformatigen Werkstückes mit der oben beschriebenen nachteiligen Kostenfolge verbunden.

Eine besonders zweckmäßige Weiterbildung des Verfahrens gemäß der Erfindung sieht deshalb vor, dass bei Anwendung des Verfahrens an einer mit zwei Bearbeitungseinheiten an einem Werkstück arbeitenden Vorrichtung,
- bei welcher in einer Bearbeitungsstellung einer der Bearbeitungseinheiten eine Bearbeitung des Abschnittes des Werkstückes in einer bestimmten Bearbeitungsposition erfolgt, während der die Trageeinheit dieser Bearbeitungseinheit ortsfest gehalten und nach deren Ablauf die Trageeinheit dieser Bearbeitungseinrichtung zur Bearbeitung eines noch nicht bearbeiteten Abschnitts des Werkstückes in einer ausgewählten neuen Bearbeitungsposition ausgewählt wird,
- und bei welcher bei dieser Auswahl der neuen Bearbeitungsstellung die noch verbleibende Bearbeitungszeit der anderen Bearbeitungseinrichtung mit der Bearbeitungszeit verglichen wird, die zur Bearbeitung des noch nicht bearbeiteten Abschnittes des Werkstückes in der neuen Bearbeitungsstellung erforderlich ist,
- immer dann, wenn die erste Bearbeitungszeit geringer ist als die letzte Bearbeitungszeit, die eine Bearbeitungseinheit zu einem anderen Abschnitt des Werkstückes bewegt wird, welcher nicht benachbart zu dem Abschnitt des Werkstücks angeordnet ist, der gerade von der anderen Bearbeitungseinheit bearbeitet wird, um an dem anderen Abschnitt gewünschte Bearbeitungsmaßnahmen durch die erste Bearbeitungseinheit auszuführen.

Durch diese Art der Steuerung kann bei der Auswahl einer neuen Bearbeitungsstellung berücksichtigt werden, ob durch ein Bewegen der einen Bearbeitungseinheit in diese neue Bearbeitungsstellung jeweils andere Bearbeitungseinheit behindert wird und damit zeitweise nicht eingesetzt werden kann. Dies ist insbesondere der Fall, wenn die noch verbleibende Bearbeitungszeit der anderen Bearbeitungseinheit geringer als die Bearbeitungszeit ist, die zur Bearbeitung des noch nicht bearbeiteten Abschnitts des Werkstücks in der neuen Bearbeitungsstellung erforderlich ist. Soll bei einer solchen Konstellation ein zwischen den Bearbeitungseinheiten angeordneter Abschnitt des Werkstückes, welcher benachbart zu dem Abschnitt des Werkstücks angeordnet ist, der gerade von der anderen Bearbeitungseinheit bearbeitet wird, bearbeitet werden, ist es zur Verkürzung der gesamten Bearbeitungszeit erforderlich, dass die eine Bearbeitungseinheit zu einem anderen nicht derart benachbarten Abschnitt des Werkstücks bewegt wird, um dort gewünschte Bearbeitungsmaßnahmen auszuführen, da ansonsten die andere Bearbeitungseinheit während der Bearbeitung durch die eine Bearbeitungseinheit in der neuen Bearbeitungsstellung blockiert und damit uneffektiv eingesetzt wäre.

Es ist gemäß diesem Verfahren möglich, dass vor dem Beginn der Bearbeitung des gesamten Werkstückes auf der Basis der an diesem vorzunehmenden Bearbeitungsmaßnahmen mittels einer geeigneten Software eine zeitoptimierte Bearbeitungssequenz für jede der wenigstens zwei Bearbeitungseinrichtung ermittelt wird, um die gesamte Bearbeitungszeit weitestgehend zu minimieren. Jedoch ist es auch möglich, dass nach wenigstens einer oder mehreren abgeschlossenen Bearbeitungsmaßnahmen eine erneute Berechnung durchgeführt wird.

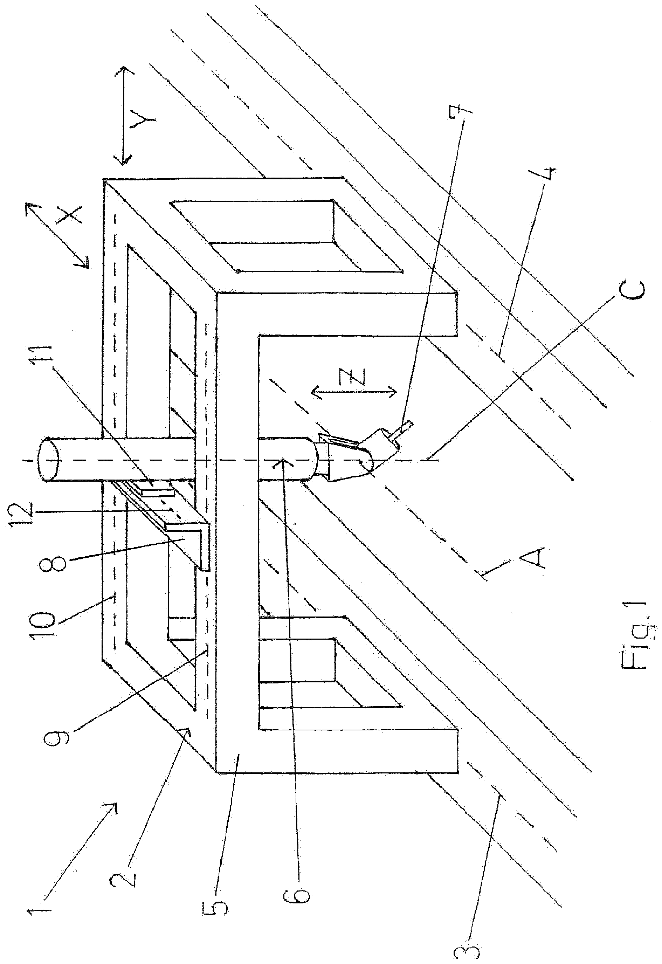

Weitere Vorteile und Merkmale der vorliegenden Erfindung werden im Folgenden anhand des in der anhängenden Figur gezeigten Ausführungsbeispiels für die erfindungsgemäße Vorrichtung näher erläutert. Dabei zeigt
- Figur 1: eine perspektivische, schematische Darstellung einer für das Verfahren gemäß der Erfindung verwendeten Vorrichtung.

Figur 1 zeigt eine schematische und perspektivische Darstellung einer Vorrichtung 1 zum Bearbeiten eines nicht dargestellten großformatigen Werkstückes. Die Vorrichtung 1 weist eine in der Hauptrichtung X relativ zu dem Werkstück bewegbar angeordnete Bearbeitungseinheit 2 zum Bearbeiten des Werkstückes auf. Hierbei ist die Bearbeitungseinheit 2 auf in der Hauptrichtung X verlaufend angeordneten X-Schienen 3 und 4 bewegbar gelagert. Das Werkstück wird zu seiner Bearbeitung zwischen den X-Schienen 3 und 4 positioniert und mittels einer nicht dargestellten Halteeinheit ortsfest gehalten.

Die Bearbeitungseinheit 2 umfasst eine portalförmig ausgebildete Trageeinheit 5 und eine an der Trageeinheit 5 angeordnete Bearbeitungseinrichtung 6, die wiederum ein motorisch angetriebenes Bearbeitungswerkzeug 7 umfasst. Das Bearbeitungswerkzeug 7 ist relativ zu der Trageeinheit 5 sowohl um eine vertikale Achse C als auch um eine horizontale Achse A drehbar und in vertikaler Richtung Z bewegbar an der Trageeinheit 5 angeordnet.

Die Bearbeitungseinrichtung 6 ist relativ zur Trageeinheit 5 in Y Richtung quer zur Hauptrichtung X bewegbar an der Trageeinheit 5 angeordnet. Hierzu ist die Bearbeitungseinrichtung 6 an einen Y-Schlitten 8 gekoppelt, welcher über die Y-Schienen 9 und 10 an der Trageeinheit 5 in Y- Richtung bewegbar gelagert ist. Des Weiteren ist die Bearbeitungseinrichtung 6 relativ zur Trageeinheit 5 in der Hauptrichtung X bewegbar an der Trageeinheit 5 angeordnet. Hierzu ist die Bearbeitungseinrichtung 6 an einen X-Schlitten 11 gekoppelt, der entlang wenigstens einer X-Schiene 12 in der Hauptrichtung X bewegbar an dem Y Schlitten 8 angeordnet ist.

## Patentansprüche

1. Verfahren zum Steuern einer Vorrichtung zum Bearbeiten eines großformatigen Werkstückes, die wenigstens eine Bearbeitungseinheit (2) mit einer portalförmig ausgebildeten Trageeinheit (5) aufweist, die auf in der Hauptrichtung (X) verlaufenden X-Schienen (3,4) verfahrbar ist, zwischen denen das Werkstück ortsfest positionierbar ist, und die eine mit einem Bearbeitungswerkzeug (7) versehene Bearbeitungseinrichtung (6) trägt, welche relativ zu der Trageeinheit (5) sowohl in der Hauptrichtung (X) als auch in der quer dazu verlaufenden Y-Richtung verschiebbar ist, **dadurch gekennzeichnet dass** beim Verbringen der Bearbeitungseinheit (2) an einen noch nicht bearbeiteten Abschnitt des Werkstückes die Bearbeitungseinrichtung (6) der Trageeinheit (5) ab dem Beginn der Verlangsamung der Bewegung der Trageeinheit (5) in der Hauptrichtung (X) bis zum Erreichen der neuen Bearbeitungsposition der Bearbeitungseinrichtung (6) in dem noch nicht bearbeiteten Abschnitt des Werkstückes vorauseilt und ab Erreichen dieser neuen Bearbeitungsposition relativ zur Trageeinheit (5) eine die Bewegung der Trageeinheit (5) kompensierende gegenläufige Bewegung ausführt.

2. Verfahren inbesondere nach Patentanspruch 1, **dadurch gekennzeichnet, dass** bei Anwendung des Verfahrens an einer mit zwei Bearbeitungseinheiten (2) an einem Werkstück arbeitenden Vorrichtung,
- bei welcher in einer Bearbeitungsstellung einer der Bearbeitungseinheiten (2) eine Bearbeitung eines Abschnittes des Werkstückes in einer bestimmten Bearbeitungsposition erfolgt, während der die Trageeinheit (5) dieser Bearbeitungseinheit (2) ortsfest gehalten und nach deren Ablauf die Trageeinheit (5) dieser Bearbeitungseinrichtung (2) zur Bearbeitung eines noch nicht bearbeiteten Abschnittes des Werkstückes in einer ausgewählten neuen Bearbeitungsposition ausgewählt wird,
- und bei welcher bei dieser Auswahl der neuen Bearbeitungsstellung die noch verbleibende Bearbeitungszeit der anderen Bearbeitungseinrichtung (2) mit der Bearbeitungszeit verglichen wird, die zur Bearbeitung des noch nicht bearbeiteten Abschnittes des Werkstückes in der neuen Bearbeitungsstellung erforderlich ist,
- immer dann, wenn die erste Bearbeitungszeit geringer ist als die letzte Bearbeitungszeit, die eine Bearbeitungseinheit (2) zu einem anderen Abschnitt des Werkstücks bewegt wird, welcher nicht benachbart zu dem Abschnitt des Werkstücks angeordnet ist, der gerade von der anderen Bearbeitungseinheit bearbeitet wird, um an dem anderen Abschnitt gewünschte Bearbeitungsmaßnahmen durch die erste Bearbeitungseinheit (2) auszuführen.
